# EUROPEAN PATENT APPLICATION

(11) **EP 2 902 926 A1**
(43) Date of publication of application: **05.08.2015**
(21) Application number: 14290023.2
(22) Date of filing: 31.01.2014
(51) Int. Cl.: G06F 17/30

(54) **Filtering data from a database**

(71) Applicant: Hewlett-Packard Development Company, L.P., Houston, TX 77070 (US)
(72) Inventor: Picard, Jean-Charles, 06901 Sophia-Antipolis (FR)
(74) Representative: Lefevre-Groboillot, David André

(57) **Abstract**

Filtering data from a database includes obtaining, at a persistence layer, a administrator defined filter based on criteria of a user, receiving, from the user, a request to obtain data from a database, and filtering, through an API, the data from the database based on the request and the administrator defined filter to create filtered data.

## Description

### BACKGROUND

A database may store data such as reports, images, audio files, video files, and other data in memory. Further, an administrator may desire to restrict what data, stored in the database, a user may access.

### BRIEF DESCRIPTION OF THE DRAWINGS

The accompanying drawings illustrate various examples of the principles described herein and are a part of the specification. The examples do not limit the scope of the claims.
Fig. 1 is a diagram of an example of a system for filtering data from a database, according to one example of principles described herein.
Fig. 2 is a diagram of an example of a filtering system, according to one example of principles described herein.
Fig. 3 is a diagram of an example of a filter table, according to one example of principles described herein.
Fig. 4 is a flowchart of an example of a method for filtering data from a database, according to one example of principles described herein.
Fig. 5 is a flowchart of an example of a method for filtering data from a database, according to one example of principles described herein.
Fig. 6 is a diagram of an example of a filtering system, according to one example of principles described herein.
Fig. 7 is a diagram of an example of a filtering system, according to one example of principles described herein.

Throughout the drawings, identical reference numbers designate similar, but not necessarily identical, elements.

### DETAILED DESCRIPTION

To restrict what data the user may access, the administrator creates a filter to allow or restrict the user from accessing certain data on the database. Each time the administrator creates a filter, the administrator resets all computer systems related to the filter. Often, the administrator creates hundreds of filters for a company. Creating hundreds of filters for a company can be a burdensome task for an administrator if the administrator has to reset all the computer systems when creating a filter.

Further, the administrator maintains the hundreds of filters for the company. To maintain the hundreds of filters for the company, the administrator updates each filter associated to each user. Further, the administrator resets all computer systems related to each of the filters. As a result, maintaining hundreds of filters for a company can be a burdensome task for an administrator.

The principles described herein include a method for filtering data from a database. Such a method includes obtaining, at a persistence layer, an administrator defined filter based on criteria of a user, receiving, from the user, a request to obtain data from a database, and filtering, through an application program interface (API), the data from the database based on the request and the administrator defined filter to create filtered data. Such a method allows an administrator to dynamically define an administrator defined filter without resetting all computer systems related to the user filter. As a result, the administrator defined filter may be maintained during execution of the request.

In the present specification and in the appended claims, the term "data" is meant to be understood broadly as discrete information stored in a database. In one example, data may include service level agreement (SLA) data. In another example, data may include audio data such as music, sounds, other audio data, or combinations thereof. Further, the data may include visual data such as images, video, charts, other visual data, or combinations thereof.

In the present specification and in the appended claims, the term "user filter" is meant to be understood broadly as a mechanism for filtering data stored in a database. In one example, the user filter may be a user defined filter, an administrator defined filter, or combinations thereof. In this example, the user defined filter is a filter defined by a user to further filter data that is returned from a database. The administrator defined filter is a filter defined by an administrator to restrict what data the user may access in the database.

In the present specification and in the appended claims, the term "system filter" is meant to be understood broadly as a mechanism to further allow or restrict at least one user from accessing data stored in a database based on policies of a system. In one example, a system filter may include a customer filter, a provider filter, a supplier filter, a SLA filter, a service offering filter, a service filter, a service definition filter, other system filters, or combinations thereof. Further, the system filter may be created by an administrator at a persistence layer.

In the present specification and in the appended claims, the term "criteria " is meant to be understood broadly as discrete information that is used to define a user filter, a system filter, or combinations thereof to filter data from a database. In one example, criteria may include a filter name, an author, a description, extensible markup language (XML) content, or combinations thereof. Further, the criteria may be linked to other criteria, filters, users, or combinations thereof by Boolean expressions such as AND/OR. Further, criteria may include a number of criteria types such as available operators, and values. In one example, the criteria may be based on a role of the user.

In the present specification and in the appended claims, the term "request" is meant to be understood broadly as a mechanism for managing data in a database. In one example, the request may include data insertion, querying, data access control, update, delete, schema creation and modification, or combinations thereof. Further, a request may be made as a structured query language (SQL) request, an object query language (OQL) request, .QL request, other requests, or combinations thereof.

In the present specification and in the appended claims, the term "filtered data" is meant to be understood broadly as data, requested by a user, that has been allowed to be retrieved from a database. In one example, the filtered data may include SLA data, audio data such as music, sounds, other audio data, or combinations thereof, and visual data such as images, video, charts, other visual data, or combinations thereof.

Further, as used in the present specification and in the appended claims, the term "a number of" or similar language is meant to be understood broadly as any positive number comprising 1 to infinity; zero not being a number, but the absence of a number.

In the following description, for purposes of explanation, numerous specific details are set forth in order to provide a thorough understanding of the present systems and methods. It will be apparent, however, to one skilled in the art that the present apparatus, systems, and methods may be practiced without these specific details. Reference in the specification to "an example" or similar language means that a particular feature, structure, or characteristic described in connection with that example is included as described, but may not be included in other examples.

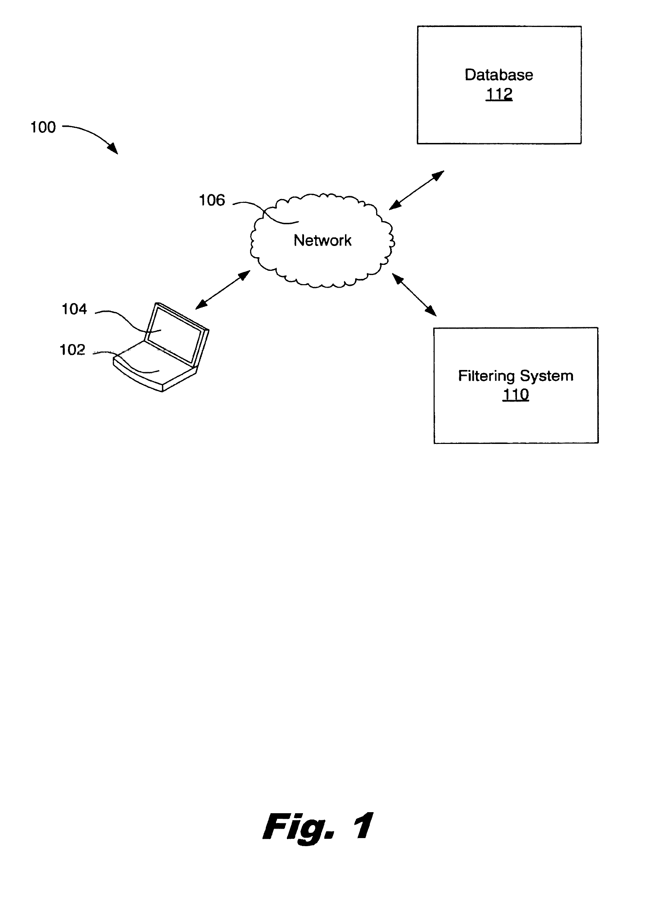

Referring now to the figures, Fig. 1 is a diagram of an example of a system for filtering data from a database, according to one example of principles described herein. As will be described below, a filtering system is in communication with a database to filter, through an API, the data from the database based on a request and an administrator defined filter to create filtered data. Further, the filtering system retrieves the filtered data from the database.

As illustrated in Fig. 1, the system (100) includes a filtering system (110). In one example, the filtering system (110) obtains, at a persistence layer, an administrator defined filter based on criteria of a user. In this example, the administrator defined filter is a filter defined by an administrator to restrict what data the user may access in the database. In one example, the administrator defined filter may be defined by accessing the filtering system (110).

Further, the filtering system (110) receives, from the user, a request to obtain data from a database (112). The request may be a SQL request, an OQL request, a .QL request, other requests, or combinations thereof. In one example, the request may be received from a user device (102) that the user is using. In this example, a display (104) on the user device (102) allows the user to make the request. Further, the database (112) includes data that is stored in memory that the user desires to retrieve.

Further, the filtering system (110) filters, through an API, the data from the database (112) based on the request and administrator defined filter to create filtered data. As will be described in other parts of this specification, the filtering system (110) includes an API that includes a number of system filters. More information about the filtering system (110) will be described in later parts of this specification.

While this example has been described with reference to the filtering system being located over the network, the filtering system may be located in any appropriate location according to the principles described herein. For example, the filtering system may be located in a user device, a database, a server, other locations, or combinations thereof.

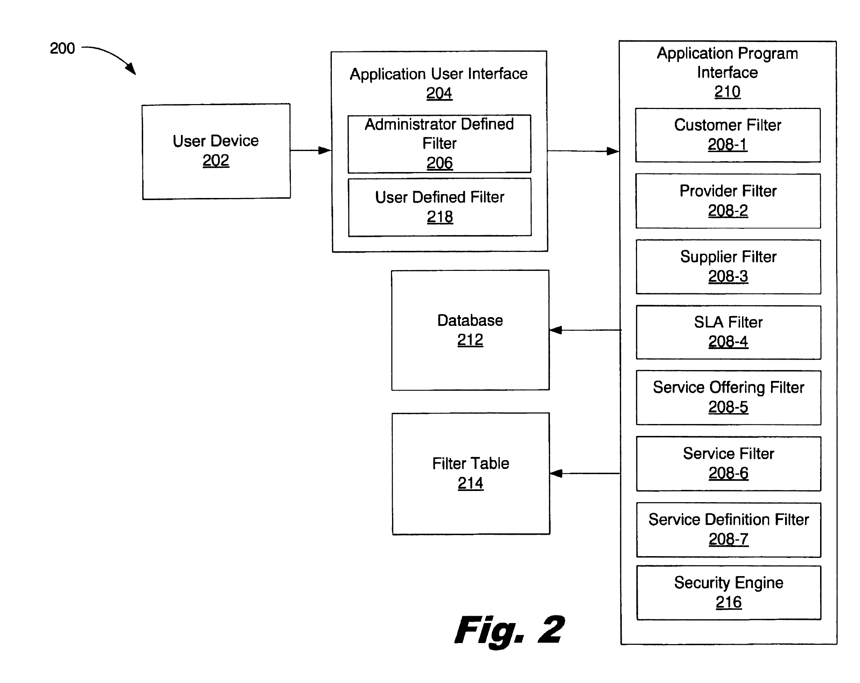

Fig. 2 is a diagram of an example of a filtering system, according to one example of principles described herein. As will be described below, a filtering system is in communication with a database to filter, through an API, the data from the database based on a request and an administrator defined filter to create filtered data. Further, the filtering system retrieves the filtered data from the database.

As illustrated in Fig. 2, the system (200) includes an application user interface (204). In one example, the application user interface (UI) (204) allows an administrator to define, at a persistence layer, an administrator defined filter (206) based on criteria of a user. In one example, the administrator may use a user device (202) to access the application UI (204). As will be described in other parts of this specification, the administrator defined filter (206) may specify that the user may retrieve data from a database that is related to projects that the user is working on. For example, the user may be working on a SLA for customer X. In this example, the administrator defined filter (206) forces all requests for the user to have criteria, such as a customer name, set to customer X. Further, a user using the application UI (204) may define a user defined filter (218) to further filter the data from the database. In this example, both the administrator defined filter (206) and the user defined filter (218) may be referred to as a user filter.

As illustrated in Fig. 2, the system (200) includes an API (210). In one example, the API (210) may be a public API, a private API, or a service API. In this example, the API (210) specifies how a number of components, such as the user device (202), the application UI (204), the database (212), and the filter table (214) interact with each other. Further, the API (210) includes a number of system filters (208). In this example, the system filters (208) include a customer filter (208-1), a provider filter (208-2), a supplier filter (208-3), a SLA filter (208-4), a service offering filter (208-5), a service filter (208-6), and a service definition filter (208-7).

In one example, the customer filter (208-1) filters data in the database (212) based on a customer. For example, the data may be filtered based on a customer name, such as customer X. The provider filter (208-2) filters data in the database (212) based on a provider. The supplier filter (208-3) filters data in the database (212) based on a supplier. The SLA filter (208-4) filters data in the database (212) based on a SLA. The service offering filter (208-5) filters data in the database (212) based on a service offering. The service filter (208-6) filters data in the database (212) based on a service. The service definition filter (208-7) filters data in the database (212) based on a service definition.

In keeping with the given example, if the user executes a public service API via the API (210) to obtain all active SLA in the database (212), the system (200) filters, through the API (210), the data from the database (212) based on the request and the administrator defined filter (206) to create filtered data. For example, the user may be working on a SLA for customer X. In this example, the administrator defined filter (206) and the customer filter (208-1) are enabled to force all requests for the user to have criteria, such as a customer name, set to customer X.

As illustrated, Fig. 2 includes a filter table (214). In one example, the filter table (214) defines the user of the application and associates the user to the administrator defined filter (206) to allow the user to access data or be restricted from accessing data in the database (212).

Further, the API (210) may include a security engine (216). As will be described in other parts of this specification, all APIs have to follow rules from a base class, such as API a base manager, to leverage the security engine (216) to be able to apply the system filters (208).

While this example has been described with reference to the API including seven filters, the API may include more than seven filters. For example, the API may include hundreds of filters. Further, while this example has been described with reference to defining one administrator defined filter, the application UI may allow an administrator to define several user filters.

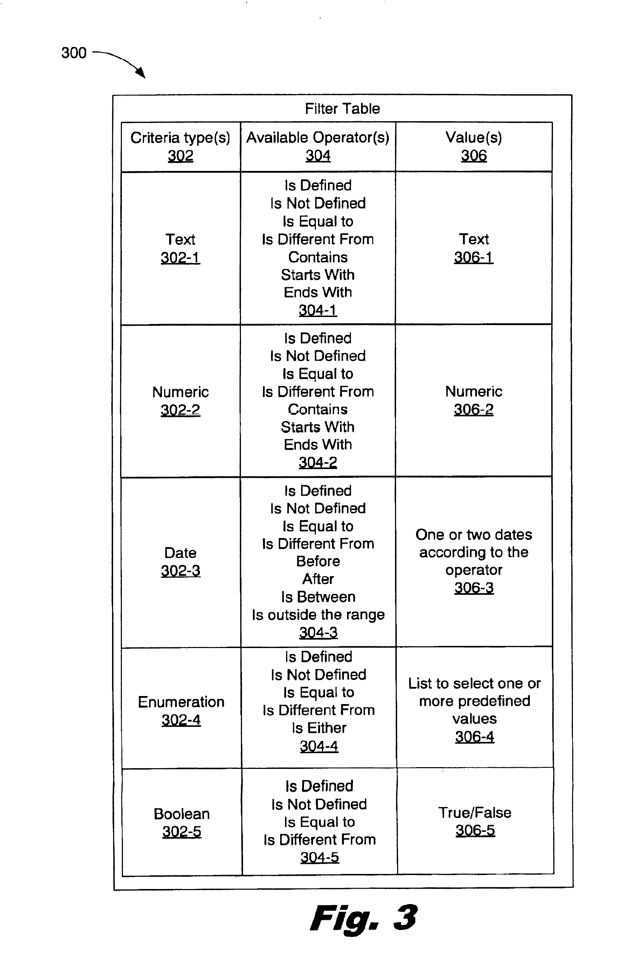

Fig. 3 is a diagram of an example of a filter table, according to one example of principles described herein. As mentioned above, the filter table defines the user of the application and associates the user to the administrator defined filter to allow the user to access data or be restricted from accessing data in the database.

As illustrated in Fig. 3, the filter table (300) includes criteria types (302), available operators (304), and values (306). In one example, the criteria type (302) may be associated with the available operators (304) and the values (306). For example, if the criteria type (302) is text (302-1), the text (302-1) is associated with available operators (304-1) such as is defined, is not defined, is equal to, is different from, contains, starts with, ends with, or combinations thereof. Further, the text (302-1) is associated with a value (306) such as text (306-1). In this example, text (306-1) may be words, terms, phrases, characters, other text, or combinations thereof.

In another example, if the criteria type (302) is numeric (302-2), the numeric (302-2) is associated with available operators (304-2) such as is defined, is not defined, is equal to, is different from, contains, starts with, ends with, or combinations thereof. Further, the numeric (302-2) is associated with a value (306) such as numeric (306-2). In this example, numeric (306-2) may be numbers.

In yet another example, if the criteria type (302) is date (302-3), the date (302-3) is associated with available operators (304-3) such as is defined, is not defined, is equal to, is different from, before, after, is between, is outside of, or combinations thereof. Further, the date (302-3) is associated with a value (306) such as one or two dates according to the operator (306-3). For example, January 15^{th} 2014 is associated with January 15^{th} 2014.

In still another example, if the criteria type (302) is enumeration (302-4), the enumeration (302-4) is associated with available operators (304-4) such as is defined, is not defined, is equal to, is different from, is either, or combinations thereof. Further, the enumeration (302-4) is associated with a value (306) such as enumeration (306-4). For example, the enumeration (306-4) may be an element in a set of data.

In still another example, if the criteria type (302) is Boolean (302-5), the Boolean (302-5) is associated with available operators (304-5) such as is defined, is not defined, is equal to, is different from, or combinations thereof. Further, the Boolean (302-5) is associated with a value (306) such as true/false (306-5).

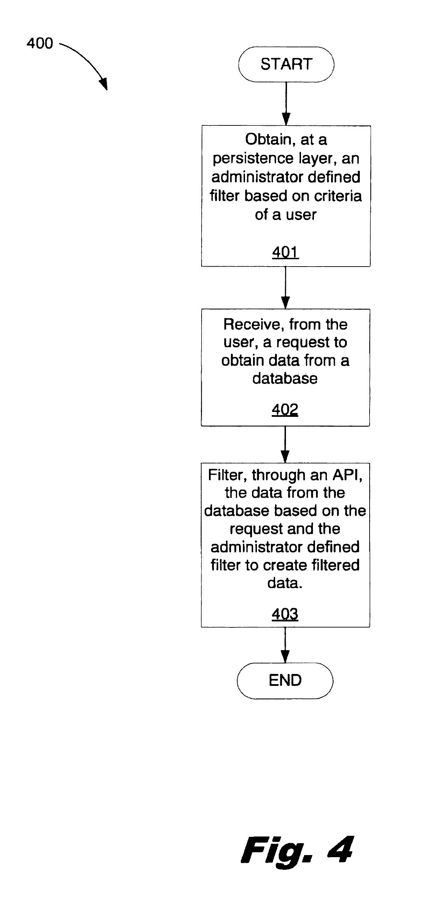

Fig. 4 is a flowchart of an example of a method for filtering data from a database, according to one example of principles described herein. In one example, the method (400) includes obtaining (401), at a persistence layer, an administrator defined filter based on criteria of a user, receiving (402), from the user, a request to obtain data from a database, and filtering (403), through an API, the data from the database based on the request and the administrator defined filter to create filtered data.

As mentioned above, the method (400) includes obtaining (401), at a persistence layer, an administrator defined filter based on criteria of a user. In one example, an application UI is provided to an administrator to define an administrator defined filter for the user. In this example, the administrator enters criteria of the user to make sure the user accesses data that the user is allowed to access. The administrator may enter a filter name, an author, a description, XML content to describe the administrator defined filter, or combinations thereof. In one example, the XML content used to describe the administrator defined filter drives the behavior of the API. Further, the administrator defined filter may be based on a role of the user. The role may be defined statically and allow a user or restrict the user from accessing data in the database.

Further, the administrator defined filter may be close to a classical filter model and include criteria such as criteria types, available operators, values, or combinations thereof as described in Fig. 3. Further, the criteria may be linked to other criteria, filters, users, or combinations thereof by Boolean expression such as AND/OR. By using the application UI to define the user filter, the XML definition of the user filter is completely hidden from the user.

In one example, the criteria may be changed at any time without restarting a process. For example, during the execution of an application.

Further, the administrator defined filter may re-use the same mechanism to provide a graphical filter to the user. In this example, the user can further define a user defined filter on top of the administrator defined filter that the administrator defined. As mentioned above, the user defined filter is a filter defined by a user to further filter data that is returned from a database. In one example, the user defined filter may specify that the top five results for the database are to be returned to the user. As a result, the user filter may include the user defined filter and the administrator defined filter. As mentioned above, the same annotation set on the persistence layer is re-used to extend the user filter to the application UI.

Further, the persistence layer allows the exchange of data between the API and the database. Further, the persistence layer is used to define all possible criteria of system filters and user filters, such as the administrator defined filter and the user defined filter, and their impact on requests to the database. Further, all data types can be supported and extended when defining the user filter.

As mentioned above in Fig. 4, the method (400) includes receiving (402), from the user, a request to obtain data from a database. As mentioned above, the request may be a SQL request, a OQL request, a .QL request, other requests, or combinations thereof. In one example, the filtering system (200) of Fig. 2 does not have to understand which request will be executed by the data access object layer (DAO) to return the filtered data from the database. Further, the filtering system (200) does not restrict the request to be formatted in a specific way to add any security criteria to the system filters, user filters, or combinations thereof.

In one example, the request may specify that a user is retrieving all data related to customer X. In another example, the request may specify that a user is retrieving all data related to SLAs for customer X.

As mentioned above, the method (400) includes filtering (403), through an API, the data from the database based on the request and the administrator defined filter to create filtered data. In one example, APIs follow rules from a base class, such as an API with a base manager, to leverage the security engine to be able to apply the system filters. Since the security engine is implemented in a base class, it is easy to support the security engine for all public APIs following the rules. In one example, the API with the base manager provides a public service to the application and delegates the execution of the public service to a DAO. The DAO executes the request and returns the filtered data, such as an entity bean, from the persistence layer. Further, the public service can call several DAOs before ending the execution of a DAO.

Further, a security engine may include a security filter. The security filter is integrated in the API as groups of services. In one example, each group of services includes a manager. For example, a compliance manager is charge of statuses and all operational information. A repository manager is charge of a SLA model.

In one example, filtering (403), through an API, the data from the database based on the request and the administrator defined filter to create filtered data includes enabling the administrator defined filter to restrict the data available to the user and enabling the user defined filter to further filter the data from the database. In one example, the system filters to enable are easily identifiable. For example, a request requesting a selection of available provider will enable a provider filter before executing the request with the DAO.

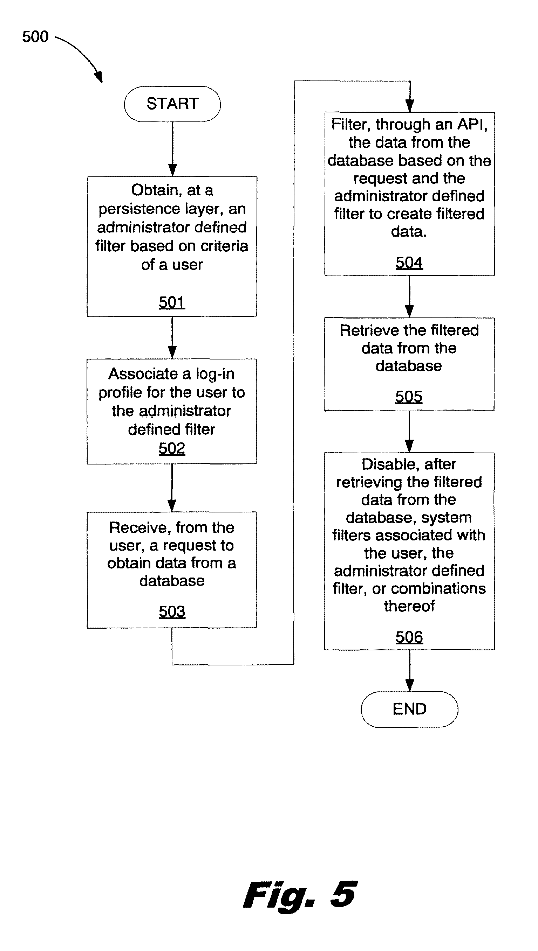

Fig. 5 is a flowchart of an example of a method for filtering data from a database, according to one example of principles described herein. In one example, the method (500) includes obtaining (501), at a persistence layer, an administrator defined filter based on criteria of a user, associating (502) a log-in profile for the user to the administrator defined filter, receiving (503), from the user, a request to obtain data from a database, filtering (504), through an API, the data from the database based on the request and the administrator defined filter to create filtered data, retrieving (505) the filtered data from the database, and disabling (506), after retrieving the filtered data from the database, system filters associated with the user, the administrator defined filter, or combinations thereof.

As mentioned above, the method (500) includes associating (502) a log-in profile for the user to the administrator defined filter. To filter data from the database based on a administrator defined filter, each administrator defined filter is associated to a user. For example, using a log-in profile. In one example, user X may have a log-in profile such as user X log-in. In this example, user X log-in is associated with the administrator defined filter for user X. As a result, when user X logs-in to the filtering system, all administrator defined filter associated with user X are enabled. Similarly, the log-in profile for the user may be associated to the user defined filter.

As mentioned above, the method (500) includes retrieving (505) the filtered data from the database. As mentioned above, the application UI creates or re-uses an API manager. In one example, the API manager is a generic term used to describe a specific API manager in charge of a set of services. For example, a compliance manager is used to request a set of services such as all services related to a SLA compliance to detail the current value and status of the SLA objective.

Further, the API Manager has a mandatory init() function to call with the log-in profile of the user. In one example, the API manager loads the system filters from the database associated to all filter type supported. For example, one system filter for customer selection, one system filter for service offering selection, and one system filter for SLA selection

Further, when the application calls a service such as getSlaStatuses() to retrieve a list of status of active SLA for the current reference period, the filter associated to the SLA is loaded from the database to retrieve all properties and his xml content associated with active SLA. The XML content is parsed and is transformed into a filter java object. In one example, this is done using a filter handler in charge of the persistence layer. Further, the filter object is cached in an internal list to avoid another parsing in the same user session. The API manager then use the filter builder to enable the correct persistence layer filters.

Further, retrieving (505) the filtered data from the database includes mapping a list of fields or specific identifiers available for the criteria for the user filter, system filters, or combinations thereof. For example, a specific identifier such as CUSTOMER_NAME will be part of Customer system filter like all others fields available for this customer table.

In another example, an internal mapping is used to identify a correct filter name to enable, at the entity bean level, when retrieving filtered data. In one example, the filter name will be completed by a filter builder with the operator. Further, values associate to the filter name may be used as parameters. For example, zero, one, or two parameters depending on the operator used.

After the filter builder execution, the system filters and user filter are enabled and the API manager calls an associated DAO to execute the request and retrieve the filtered data matching the system filter. Further, all data is retrieved through a API manager. As a result, outside request are not allowed.

As mentioned above, the method (500) includes disabling (506), after retrieving the filtered data from the database, system filters associated with the user, the administrator defined filter, or combinations thereof. After executing the request, the API manager disables all filters applied to restore the filter environment for the nest services. For example, if filter X, filter Y, and filter Z were enabled to retrieve the filtered data from the database, filter X, filter Y, and filter Z are disabled after the filtered data is retrieved from the database.

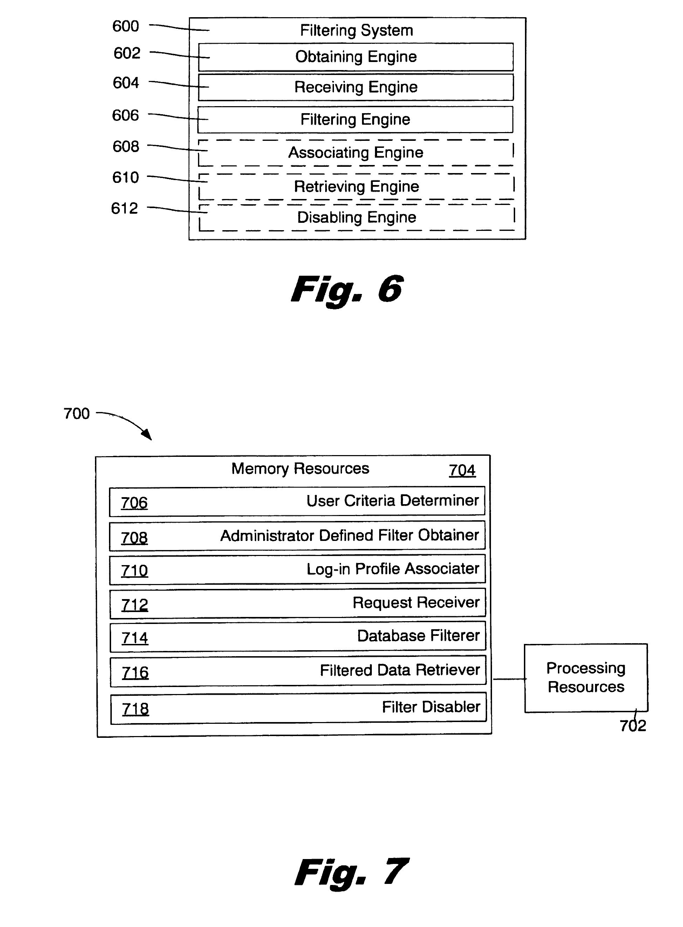

Fig. 6 is a diagram of an example of a filtering system, according to one example of principles described herein. The filtering system (600) includes an obtaining engine (602), a receiving engine (604), and a filtering engine (606). In this example, the filtering system (600) also includes an associating engine (608), a retrieving engine (610), and a disabling engine (612). The engines (602, 604, 606, 608, 610, 612) refer to a combination of hardware and program instructions to perform a designated function. Each of the engines (602, 604, 606, 608, 610, 612) may include a processor and memory. The program instructions are stored in the memory and cause the processor to execute the designated function of the engine.

The obtaining engine (602) obtains, at a persistence layer, an administrator defined filter based on criteria of a user. In one example, the obtaining engine (602) obtains one administrator defined filter. In another example, the obtaining engine (602) obtains several administrator defined filters. Further, in one example, the obtaining engine (602) allows an administrator to define an administrator defined filter for the user filter.

The receiving engine (604) receives, from the user, a request to obtain data from a database. In one example, the receiving engine (604) receives one request to obtain data from a database. In another example, the receiving engine (604) receives several requests to obtain data from a database.

The filtering engine (606) filters, through an API, the data from the database based on the request and the administrator defined filter to create filtered data. In one example, the filtering engine (606) filters through an API, the data from one database based on the request and the administrator defined filter to create filtered data. In another example, the filtering engine (606) filters through an API, the data from several databases based on the request and the administrator defined filter to create filtered data. Further, the filtering engine (606) enables the administrator defined filter to restrict the data available to the user. In another example, the filtering engine (606) enables the user defined filter to further filter the data from the database.

The associating engine (608) associates a log-in profile for the user to the administrator defined filter. In one example, the associating engine (608) associates one log-in profile for the user to the administrator defined filter. In another example, the associating engine (608) associates several log-in profiles for the user to the administrator defined filter.

The retrieving engine (610) retrieves the filtered data from the database. In one example, the retrieving engine (610) retrieves the filtered data from one database. In another example, the retrieving engine (610) retrieves the filtered data from several databases.

The disabling engine (612) disables, after retrieving the filtered data from the database, system filters associated with the user, the administrator defined filter, or combinations thereof. In one example, the disabling engine (612) only disables, after retrieving the filtered data from the database, the system filters associated with the user. In another example, the disabling engine (612) only disables, after retrieving the filtered data from the database, the administrator defined filter.

Fig. 7 is a diagram of an example of a filtering system, according to one example of principles described herein. In this example, filtering system (700) includes processing resources (702) that are in communication with memory resources (704). Processing resources (702) include at least one processor and other resources used to process programmed instructions. The memory resources (704) represent generally any memory capable of storing data such as programmed instructions or data structures used by the filtering system (700). The programmed instructions shown stored in the memory resources (704) include a user criteria determiner (706), an administrator defined filterfilter obtainer (708), a log-in profile associater (710), a request receiver (712), a database filterer (714), a filtered data retriever (716), and a filter disabler (718).

The memory resources (704) include a computer readable storage medium that contains computer readable program code to cause tasks to be executed by the processing resources (702). The computer readable storage medium may be non-transitory and/or physical storage medium. The computer readable storage medium may be any appropriate storage medium that is not a transmission storage medium. A non-exhaustive list of computer readable storage medium types includes non-volatile memory, volatile memory, random access memory, write only memory, flash memory, electrically erasable program read only memory, or types of memory, or combinations thereof.

The user criteria determiner (706) represents programmed instructions that, when executed, cause the processing resources (702) to determine criteria for a user. The administrator defined filter obtainer (708) represents programmed instructions that, when executed, cause the processing resources (702) to obtain, at a persistence layer, an administrator defined filter based on criteria of a user.

The log-in profile associater (710) represents programmed instructions that, when executed, cause the processing resources (702) to associate a log-in profile for the user to the administrator defined filter. The request receiver (712) represents programmed instructions that, when executed, cause the processing resources (702) to receive, from the user, a request to obtain data from a database.

The database filterer (714) represents programmed instructions that, when executed, cause the processing resources (702) to filter, through an API, the data from the database based on the request and the administrator defined filter to create filtered data. The filtered data retriever (716) represents programmed instructions that, when executed, cause the processing resources (702) to retrieve the filtered data from the database. The filter disabler (718) represents programmed instructions that, when executed, cause the processing resources (702) to disable, after retrieving the filtered data from the database, system filters associated with the user and the administrator defined filter.

Further, the memory resources (704) may be part of an installation package. In response to installing the installation package, the programmed instructions of the memory resources (704) may be downloaded from the installation package's source, such as a portable medium, a server, a remote network location, another location, or combinations thereof. Portable memory media that are compatible with the principles described herein include DVDs, CDs, flash memory, portable disks, magnetic disks, optical disks, other forms of portable memory, or combinations thereof. In other examples, the program instructions are already installed. Here, the memory resources can include integrated memory such as a hard drive, a solid state hard drive, or the like.

In some examples, the processing resources (702) and the memory resources (702) are located within the same physical component, such as a server, or a network component. The memory resources (704) may be part of the physical component's main memory, caches, registers, non-volatile memory, or elsewhere in the physical component's memory hierarchy. Alternatively, the memory resources (704) may be in communication with the processing resources (702) over a network. Further, the data structures, such as the libraries, may be accessed from a remote location over a network connection while the programmed instructions are located locally. Thus, the filtering system (700) may be implemented on a user device, on a server, on a collection of servers, or combinations thereof.

The filtering system (700) of Fig. 7 may be part of a general purpose computer. However, in alternative examples, the filtering system (700) is part of an application specific integrated circuit.

The preceding description has been presented to illustrate and describe examples of the principles described. This description is not intended to be exhaustive or to limit these principles to any precise form disclosed. Many modifications and variations are possible in light of the above teachings.

## Claims

1. A method for filtering data from a database, the method comprising:
obtaining, at a persistence layer, an administrator defined filter based on criteria of a user;
receiving, from the user, a request to obtain data from a database; and
filtering, through an application program interface (API), the data from the database based on the request and the administrator defined filter to create filtered data.

2. The method of claim 1, in which the request is a structured query language (SQL) request, an object query language (OQL) request, or a .QL request.

3. The method of claim 1, in which filtering, through the API, the data from the database based on the request and the administrator defined filter further comprises:
enabling the administrator defined filter to restrict the data available to the user; and
enabling a user defined filter to further filter the data from the database.

4. The method of claim 3, in which the administrator defined filter and the user defined filter comprise criteria types, available operators, values, or combinations thereof.

5. The method of claim 1, further comprising associating a log-in profile for the user to the administrator defined filter.

6. The method of claim 1, further comprising retrieving the filtered data from the database.

7. The method of claim 1, further comprising disabling, after retrieving the filtered data from the database, system filters associated with the user, the administrator defined filter, or combinations thereof.

8. A system for filtering data from a database, the system comprising:
an obtaining engine to obtain, at a persistence layer, an administrator defined filter based on criteria of a user;
an associating engine to associate a log-in profile for the user to the administrator defined filter;
a receiving engine to receive, from the user, a request to obtain data from a database;
a filtering engine to filter, through an application program interface (API), the data from the database based on the request and the administrator defined filter to create filtered data;
a retrieving engine to retrieve the filtered data from the database; and
a disabling engine to disable, after retrieving the filtered data from the database, system filters associated with the user and the administrator defined filter.

9. The system of claim 8, in which the filtering engine further enables the administrator defined filter to restrict the data available to the user and a user defined filter to further filter the data from the database.

10. The system of claim 9, in which the administrator defined filter and the user defined filter comprise criteria types, available operators, values, or combinations thereof.

11. The system of claim 9, in which the request is a structured query language (SQL) request, an object query language (OQL) request, or a .QL request.

12. A computer program product for filtering data from a database, comprising:
a tangible computer readable storage medium, said tangible computer readable storage medium comprising computer readable program code embodied therewith, said computer readable program code comprising program instructions that, when executed, causes a processor to:
obtain, at a persistence layer, an administrator defined filter based on criteria of the user;
receive, from a user, a request to obtain data from a database;
filter, through an application program interface (API), the data from the database based on the request and the administrator defined filter to create filtered data; and
disable, after retrieving the filtered data from the database, system filters associated with the user and the administrator defined filter.

13. The product of claim 12, further comprising computer readable program code comprising program instructions that, when executed, cause said processor to associate a log-in profile for the user to the administrator defined filter.

14. The product of claim 12, further comprising computer readable program code comprising program instructions that, when executed, cause said processor to enable the administrator defined filter to restrict the data available to the user and a user defined filter to further filter the data from the database.

15. The product of claim 12, further comprising computer readable program code comprising program instructions that, when executed, cause said processor to retrieve the filtered data from the database.
